# EUROPÄISCHE PATENTANMELDUNG

(11) **EP 2 127 942 A2**
(43) Veröffentlichungstag der Anmeldung: **02.12.2009**
(21) Anmeldenummer: 09011637.7
(22) Anmeldetag: 17.01.2002
(51) Int. Cl.: B60N 2/64

(54) **Sitz, insbesondere für ein Fahrzeug**

(30) Priorität: 18.01.2001 AT 402001 U; 07.03.2001 AT 1642001 U
(62) Teilanmeldung aus: 02715964.9
(71) Anmelder: Lanz, Eduard, 8010 Graz (AT)
(72) Erfinder: Lanz, Eduard, 8010 Graz (AT)
(74) Vertreter: Hübscher, Helmut

(57) **Zusammenfassung**

Bei einem Sitz, insbesondere für ein Fahrzeug, mit einer gepolsterten Sitzfläche (2) und einer gepolsterten Rückenlehne (3) weist die Sitzfläche (2) in einem an die Rückenlehne (3) anschließenden hinteren und einem eine Beinauflage bildenden vorderen Bereich (9, 10) eine in Richtung der Sitztiefe unterteilte Polsterung mit je für sich federnd nachgiebigen Polsterungsabschnitten (6) auf.

## Beschreibung

Die Erfindung bezieht sich auf einen Sitz, insbesondere für ein Fahrzeug, mit einer gepolsterten Sitzfläche und einer gepolsterten Rückenlehne.

Sitze, die über längere Zeitspannen benützt werden, wie dies vor allem bei Fahrzeugsitzen der Fall ist, sollen den Körper eines Benützers im wesentlichen dynamisch entlasten, nicht aber ruhigstellen. Herkömmliche Sitze können dieser Anforderung nur bedingt genügen und zwingen dem Benützer Sitzhaltungen auf, die zu unterschiedlichen Beschwerden führen können.

Der Erfindung liegt somit die Aufgabe zugrunde, einen Sitz, insbesondere für ein Fahrzeug, der eingangs geschilderten Art so auszugestalten, daß eine beschwerdefreie Sitzbenützung auch über längere Zeitspannen gewährleistet werden kann.

Die Erfindung löst die gestellte Aufgabe dadurch, dass die Sitzfläche in einen an die Rückenlehne anschließenden hinteren und einen eine Beinauflage bildenden vorderen Bereich unterteilt ist, wobei der hintere Bereich gegenüber dem vorderen Bereich schwenkbar gelagert ist.

Der Erfindung liegt die Erkenntnis zugrunde, dass zur Anpassung eines Sitzes an mögliche Beckenbewegungen die Sitzfläche entsprechend zu gestalten ist, indem die Sitzfläche in einen an die Rückenlehne anschließenden hinteren und einen eine Beinauflage bildenden vorderen je für sich nachgiebigen Bereich in Richtung der Sitztiefe unterteilt wird. Die hinteren Polsterungsabschnitte wirken dabei mit den Polsterungsabschnitten der Rückenlehne im Bereich der Lendenwirbelsäule zusammen, sodass sich der Sitz auch im Übergangsbereich von der Sitzfläche zur Rückenlehne an die jeweilige Sitzhaltung angleicht. Die weitgehend voneinander unabhängig einfedernden Polsterungsabschnitte im Bereich der Beinauflage lassen eine entsprechende Berücksichtigung der sich ändernden Oberschenkellage zu, ohne örtliche Druckstellen im Auflagebereich befürchten zu müssen. Da die Beine unterschiedlich bewegt werden, empfiehlt sich außerdem eine Teilung der Polsterungsabschnitte in Richtung der Sitzbreite, sodass sich eine voneinander weitgehend unabhängige Abstützung der Oberschenkel ergibt. In ähnlicher Weise können auch die übrigen, je für sich nachgiebig federnden Polsterungsabschnitte im Bereich der Sitzfläche und der Rückenlehne zusätzlich geteilt werden.

Durch die schwenkbare Lagerung des hinteren Bereichs der Sitzfläche gegenüber dem vorderen eine Beinauflage bildenden Bereich kann die Fähigkeit des Körpers, axiale Stöße auf die Wirbelsäule in der Kyphose federnd aufzunehmen, vorteilhaft genützt werden, weil bei solchen Stößen der hintere Bereich der Sitzfläche abschwenkt und damit eine kyphotische Wirbelsäuleneinstellung bedingt. Besonders günstige Verhältnisse ergeben sich in diesem Zusammenhang, wenn der hintere Bereich der Sitzfläche gegen Dämpferelemente abschwenkbar ist.

Die Eigenschaft des Körpers, die Belastungen der Wirbelsäule in der Kyphose besser als in der Lordose aufnehmen zu können, kann durch eine weitere Konstruktionsmaßnahme genützt werden, bei der die Rückenlehne eine die Kyphose der Lendenwirbelsäule des Benützers zumindest ab einer vorgegebenen Belastungsschwelle begünstigende Form aufweist, so daß bei einem Anpressen des Körpers gegen die Rückenlehne die Lendenwirbelsäule in die Kyphose gezwungen wird.

Die je für sich federnd nachgiebigen Polsterungsabschnitte können auf unterschiedlichen konstruktiven Wegen sichergestellt werden, beispielsweise über Federlatten oder Federteller. Besonders einfache Konstruktionsverhältnisse ergeben sich allerdings, wenn die aus einer Schaumstoffauflage bestehende Polsterung durch quer zur Sitztiefe verlaufende Einschnitte der Schaumstoffauflage in je für sich federnd nachgiebige Polsterungsabschnitte unterteilt wird. Aufgrund der voneinander durch die Einschnitte getrennten Polsterungsabschnitte können diese Polsterungsabschnitte unabhängig vom benachbarten Polsterungsabschnitt zusammengedrückt werden, was die angestrebte, örtlich beschränkte Einfederung der Polsterungsabschnitte in Abhängigkeit von der Belastung der Sitzfläche erlaubt.

Durch einen entsprechend geneigten Verlauf dieser Einschnitte kann zusätzlich eine bestimmte Bewegung unterstützt werden. Verlaufen die Einschnitte in der Schaumstoffauflage für die Sitzfläche im Bereich der Rückenlehne vom Einschnittgrund schräg nach hinten und im Bereich der Beinauflage schräg nach vorne, so kann damit eine bevorzugte Bewegung in Richtung der Sitztiefe erreicht werden. Bleiben im Bereich der Einschnitte zwischen den einzelnen Polsterungsabschnitten Stoßfugen frei, so wird die voneinander unabhängige Einfederung benachbarter Polsterungsabschnitte unterstützt, weil beim Einfedern der einzelnen Poisterungsabschnitte die Reibung zwischen den aneinandergrenzenden Polsterungsabschnitten herabgesetzt wird.

In der Zeichnung ist der Erfindungsgegenstand beispielsweise dargestellt. Es zeigen
- Fig. 1: einen erfindungsgemäßen Sitz in einem schematischen Längsschnitt,
- Fig. 2: einen Schnitt nach der Linie II-II der Fig. 1,
- Fig. 3: eine Konstruktionsvariante eines erfindungsgemäßen Sitzes in einem schematischen Längsschnitt und die
- Fig. 4 und 5: jeweils unterschiedlich aufgebaute Sitzflächen schematisch im Längsschnitt.

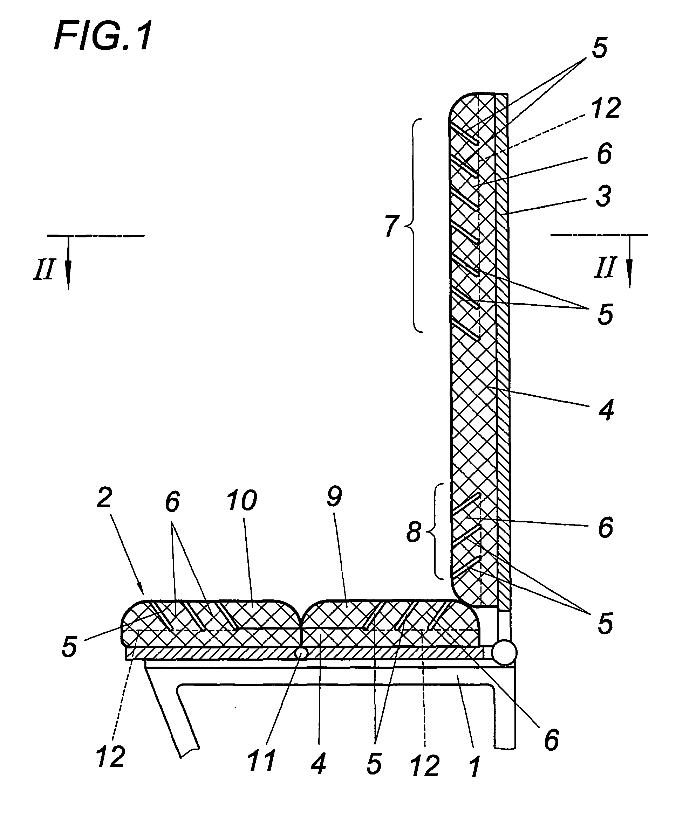

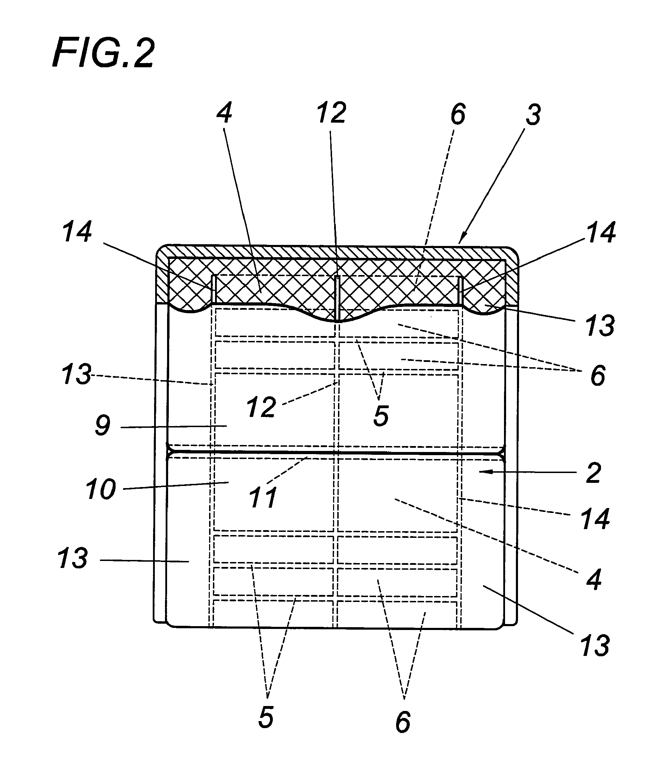

Der schematisch dargestellte Sitz gemäß dem Ausführungsbeispiel nach den Fig. 1 und 2, beispielsweise ein Flugzeugsitz, weist ein Gestell 1 mit einer Sitzfläche 2 und einer Rückenlehne 3 auf, die gegebenenfalls gegenüber der Sitzfläche 2 in ihrer Neigung verstellt werden kann. Die Polsterung sowohl der Sitzfläche 2 als auch der Rückenlehne 3 besteht im wesentlichen aus einer mit einem Überzug versehenen Schaumstoffauflage 4, die durch Einschnitte 5 vorzugsweise mit einer die halbe Dicke der Schaumstoffauflage 4 übersteigenden Tiefe in je für sich federnd nachgiebige Polsterungsabschnitte 6 unterteilt ist. Wie insbesondere der Fig. 1 entnommen werden kann, wird die Rückenlehne 3 durch die Polsterungsabschnitte 6 im Anliegebereich 7 des Brustkorbes und im Bereich 8 der Lendenwirbelsäule der Höhe nach unterteilt, während sich im Bereich der Sitzfläche 2 eine Unterteilung in Richtung der Sitztiefe ergibt, und zwar in einen hinteren an die Rückenlehne 3 anschließenden Bereich 9 und in einen vorderen Bereich 10 für die Beinauflage. Die beiden Bereiche 9 und 10 sind miteinander durch eine Achse 11 gelenkig miteinander verbunden. Durch die Einschnitte 5, die im Brustkorbbereich 7 vom Einschnittgrund schräg nach oben und im Bereich 8 der Lendenwirbelsäule vom Einschnittgrund schräg nach unten verlaufen, wird eine vorteilhafte Anpassung der Polsterung an die jeweilige Sitzhaltung erreicht, weil die sich zwischen den Einschnitten 5 bildenden Polsterungsabschnitte 6 eine örtlich begrenzte Einfederung mit der Wirkung erlauben, dass im Anliegebereich 7 des Brustkorbs das Heben und Senken der Rippen für die Brustatmung erleichtert wird. Im Bereich 8 der Lendenwirbel wird durch diese unterschiedliche örtliche Belastungen berücksichtigende Unterteilung der Polsterung eine kyphotische Bewegung der Lendenwirbelsäule ermöglicht, die durch die Polsterungsabschnitte 6 im hinteren Bereich 9 der Sitzfläche 2 unterstützt wird. In diesem Bereich 9 sind ja die Einschnitte 5 vom Einschnittgrund schräg nach hinten geneigt. Außerdem ist der hintere Bereich 9 der Sitzfläche um die Achse 11 verschwenkbar gelagert.

Eine gute, verschiedene Stellungen der Oberschenkel berücksichtigende Beinabstützung wird durch die Polsterungsabschnitte 6 im vorderen Bereich 10 der Sitzfläche 2 sichergestellt, wobei die Einschnitte 5 vom Einschnittgrund schräg nach vorne verlaufen, was wie bei den anderen schräg verlaufenden Einschnitten 5 eine bevorzugte Bewegung in Neigungsrichtung der Einschnitte 5 mit sich bringt, weil ja diese Polsterungsabschnitte 6 bei einer entsprechenden Belastung eine Bewegungskomponente in Neigungsrichtung mit sich bringen. Um im Einschnittbereich eine gegenseitige Bewegung aneinanderstoßender Polsterungsabschnitte 6 zu erleichtern, können im Bereich der Einschnitte 5 Stoßfugen zwischen den Polsterungsabschnitten 6 frei bleiben. Durch zusätzliche Einschnitte 12 in Längsrichtung der Rückenlehne 3 bzw. in Richtung der Sitztiefe können die Polsterungsabschnitte 6 zusätzlich unterteilt werden, um unterschiedliche seitliche Belastungen des Sitzes in den einzelnen Bereichen berücksichtigen zu können. Dies ist insbesondere im Bereich 10 für die Beinauflage empfehlenswert.

Zur Seitenabstützung können sowohl im Bereich der Rückenlehne 3 als auch der Sitzfläche 2 Randwülste 13 vorgesehen sein, wie sie in der Fig. 2 angedeutet sind. Diese Randwülste 13 können von der übrigen Polsterung durch randparallele Einschnitte 14 der Schaumstoffauflage 4 getrennt sein, so daß durch diese Randwülste 13 die Einfederung der Polsterungsabschnitte 6 nicht beeinträchtigt wird.

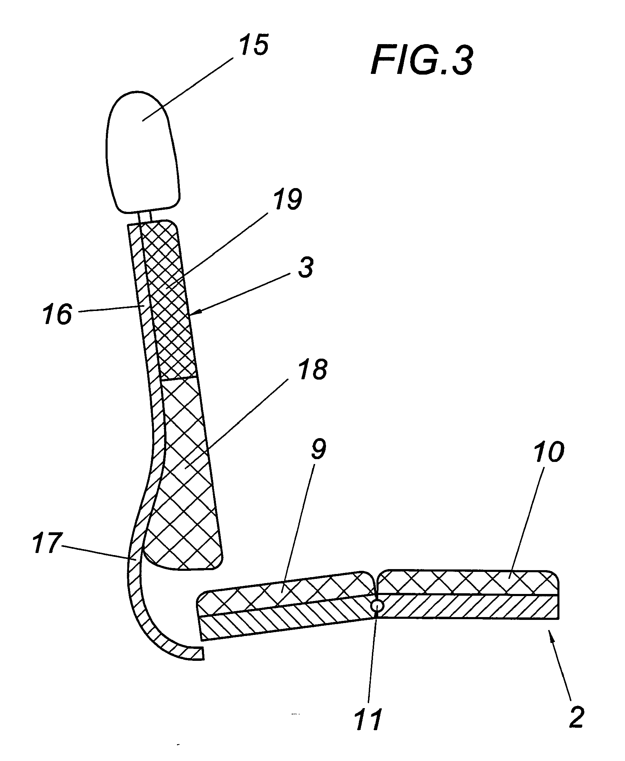

Das Ausführungsbeispiel nach der Fig. 3 zeigt einen erfindungsgemäßen Sitz in Form eines Autositzes ohne seine Bodenstützen, Höhen- und Neigungseinstelleinrichtungen, Verankerungen und Sicherheitsgurthalterungen. Der vordere und der hintere Bereich 9, 10 der Sitzfläche 2 sind wiederum über eine gemeinsame Achse 11 gelenkig miteinander verbunden. Die Rückenlehne 3, die mit einer Kopfstütze 15 versehen ist, besteht aus einer tragenden Schale 16, die im Lendenwirbelbereich eine Auswölbung 17 aufweist. Da die Polsterung 18 der Rückenlehne 3 diese Auswölbung 17 der Schale 16 jedoch nicht mitmacht, wird bei einer entsprechenden Andrückkraft des Körpers eines Benützers an die Rückenlehne 3 eine kyphotische Wölbung der Lendenwirbelsäule erzwungen, insbesondere bei einem gleichzeitigen Abschwenken des hinteren Bereiches 9 der Sitzfläche 2 um die Achse 11. Die Brustkorbabstützung 19 der Rückenlehne 3 ist als härterer Einsatz der Polsterung dargestellt, die durch die weicheren seitlich an die mittlere Brustkorbabstützung anschließenden Polsterungsabschnitte die Beweglichkeit des Brustkorbs im Rippen- und Schulterblattbereich sicherstellt.

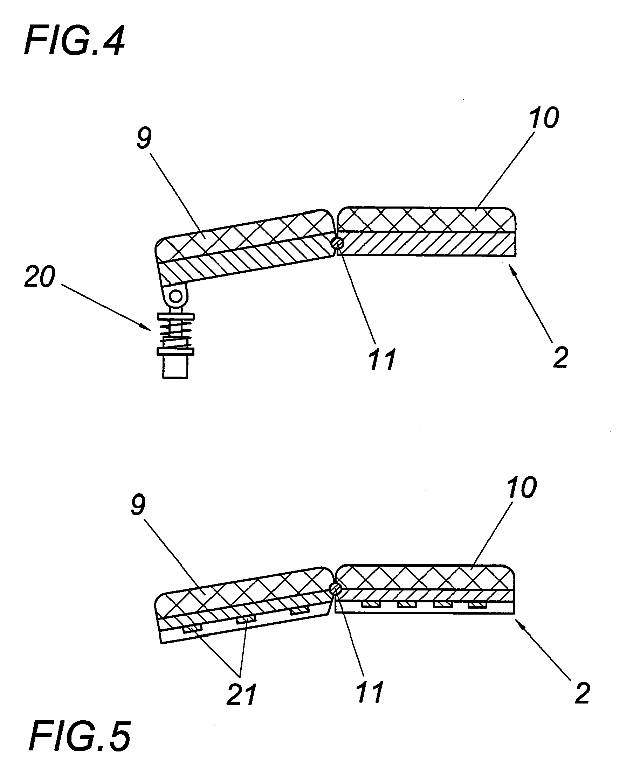

Nach der Fig. 4 wird der mit dem vordere Bereich 10 der Sitzfläche 2 gelenkig verbundene hintere Sitzflächenbereich 9 über ein Dämpferelement 20 bzw. mehrere solcher Dämpferlemente abgestützt. Diese Dämpferelemente 20 sind beim Ausführungsbeispiel als Feder-Stoßdämpferelemente veranschaulicht. Schließlich zeigt Fig. 5 die Möglichkeit, die Sitzflächenbereiche 9 und 10 auf einem Lattenrost 21 als Dämpfungselement abzustützen, wobei der Lattenrost 21 im Bereich des hinteren Sitzflächenbereichs 9 durch größere Abstände oder größere Biegsamkeit der Latten weicher als im Bereich des vorderen Sitzflächenbereichs 10 eingestellt ist.

## Patentansprüche

1. Sitz, insbesondere für ein Fahrzeug, mit einer gepolsterten Sitzfläche (2) und einer gepolsterten Rückenlehne (3), **dadurch gekennzeichnet, dass** die Sitzfläche (2) in einen an die Rückenlehne (3) anschließenden hinteren und einen eine Beinauflage bildenden vorderen Bereich (9, 10) unterteilt ist, wobei der hintere Bereich (9) gegenüber dem vorderen Bereich schwenkbar gelagert ist.

2. Sitz nach Anspruch 1, **dadurch gekennzeichnet, daß** der hintere Bereich (9) der Sitzfläche (2) gegen Dämpferelemente (20) abschwenkbar ist.

3. Sitz nach Anspruch 1 oder 2, **dadurch gekennzeichnet, daß** die Rückenlehne (3) eine die Kyphose der Lendenwirbelsäule des Benützers zumindest ab einer vorgegebenen Belastungsschwelle begünstigende Form aufweist.

4. Sitz nach einem der Ansprüche 1 bis 3, **dadurch gekennzeichnet, dass** die aus einer Schaumstoffauflage (4) bestehende Polsterung durch quer zur Rückenlehne (3) bzw. quer zur Sitztiefe verlaufende Einschnitte (5) der Schaumstoffauflage (4) in je für sich federnd nachgiebige Polsterungsabschnitte (6) unterteilt ist.

5. Sitz nach Anspruch 4, **dadurch gekennzeichnet, dass** die Einschnitte (5) in der Schaumstoffauflage (4) für die Rückenlehne (3) im Bereich der Brustkorbabstützung vom Einschnittgrund schräg nach oben und im Bereich (9) der Lendenwirbelsäule vom Einschnittgrund schräg nach unten verlaufen.

6. Sitz nach Anspruch 4 oder 5, **dadurch gekennzeichnet, daß** die Einschnitte (6) in der Schaumstoffauflage (4) für die Sitzfläche (2) im hinteren Bereich (9) vom Einschnittgrund schräg nach hinten und im vorderen Bereich (10) der Beinauflage schräg nach vorne verlaufen.

7. Sitz nach einem der Ansprüche 4 bis 6, **dadurch gekennzeichnet, dass** im Bereich der Einschnitte (5) zwischen den einzelnen Polsterungsabschnitten (6) Stoßfugen frei bleiben.
